# EUROPÄISCHE PATENTSCHRIFT

(11) **EP 1 605 790 B1**
(45) Veröffentlichungstag und Bekanntmachung des Hinweises auf die Patenterteilung: **12.11.2008**
(21) Anmeldenummer: 05700778.3
(22) Anmeldetag: 10.01.2005
(51) Int. Cl.: A43B 7/12, A43B 7/08, B29D 31/515

(54) **SCHUH MIT ATMUNGSAKTIVER SOHLE**
SHOE WITH AN ACTIVELY BREATHING UNIT
CHAUSSURE A SEMELLE FAVORISANT LA RESPIRATION

(30) Priorität: 09.01.2004 DE 202004000307 U
(43) Veröffentlichungstag der Anmeldung: 21.12.2005
(73) Patentinhaber: TENDENZA SCHUHHANDELSGES. MBH & CO. KG, 59227 Ahlen (DE)
(72) Erfinder: AUF DER LANVER, Johannes, 59227 Ahlen (DE)
(74) Vertreter: Grosse - Schumacher - Knauer - von Hirschhausen
(86) Internationale Anmeldenummer: PCT/EP2005/000135
(87) Internationale Veröffentlichungsnummer: WO 2005/065479

(56) Entgegenhaltungen:
- EP-A- 0 121 645
- WO-A-02/32246
- WO-A-20/04004504
- WO-A-20/04028284
- DE-U1-9202004 008 53
- US-A1- 2002 100 187
- US-A1- 2002 157 278

## Beschreibung

Die Erfindung betrifft einen Schuh nach dem Oberbegriff des Anspruchs 1.

Bei einem gattungsgemäßen Schuh (EP 0 382 904 B1) ist eine atmungsaktive, nicht wasserdurchlässige folienartige Membran großflächig mit einer Laufsohle verbunden und ggf. mit einer Innen- oder Zwischensohle, die eine Vielzahl größerer kreisrunder Durchbrechungen oberhalb der Membran aufweist, überdeckt. Um der die Membran nach unten durchdringenden Feuchtigkeit den Austritt aus der Schuhsohle nach außen zu gestatten, ist bei diesem bekannten Schuh die Laufsohle mit einer Mehrzahl von Mikroporen versehen, welche die Dicke der Laufsohle durchsetzen. Bei derartigen Schuhen bewirkt die mikroporöse Struktur der Laufsohle zwar einen mechanischen Schutz der folienartigen atmungsaktiven aber wasserundurchlässigen Membran. Jedoch läßt die Atmungsaktivität einer derartigen Schuhsohle zu wünschen übrig.

Aus der DE 100 36 100 C1 ist eine dreiteilige Sportschuhsohle bekannt, bei der der Schuhschaft mit einer sogenannten Tragschicht verbunden wird, die mit gitterartigen Öffnungen in verschiedenen Teilbereichen versehen ist und die auf ihrer Unterseite mit einer sogenannten Außensohlenschicht versehen wird, die im wesentlichen als Laufsohle dient und im Bereich der Öffnungen der Tragschicht großflächig durchbrochen ist. Der entscheidende Schritt, um unter der Fußsohle des den Schuh benutzenden Sportlers entstehende Feuchtigkeit und Gerüche nach außen zu entfernen, wird nun darin gesehen, dass in einen Schuh mit einer derartigen Schuhsohle aus Tragschicht und Außensohlenschicht eine über die ganze Fläche perforierte Innensohlenschicht eingelegt wird und die Perforationen auf der Unterseite der Innensohlenschicht Verbindungskanäle aufweisen, die einen Horizontaltransport der unerwünschten und fortzuführenden Dämpfe bis in diejenigen Regionen gestatten, in denen die Tragschicht - allgemein als Zwischensohle bekannt - ihre nach unten führenden Öffnungen aufweist, von denen aus diese Dämpfe über die Durchbrechung der Laufsohle nach Außen geführt werden. Zwischen der Einlegesohle und der Zwischensohle kann eine atmungsaktive Membran für vollständige Wasserdichtigkeit sorgen.

Die WO 02/32246 A1 zeigt eine Schuhsohle, deren Laufsohle von einer Vielzahl von Ventilsüonskanälen 16 durchbrochen ist, so dass der durch die darüber angeordnete mehrlagige Zwischensohle nach unten durchtretende Wasserdampf ganz überwiegend zunächst horizontal zu den engen Durchtrittskanälen transportiert werden muss.

Die US 2002/0100187 A1 und die US 2002/157278 A1 weisen eine nach dem gleichen Prinzip wie die WO 02/32246 A1 aufgebaute und wirkende Schuhsohle auf.

Die EP 0 121 645 A1 beschreibt eine wasserdampfdurchlässige Schuhsohle mit fensterartigen Durchbrechungen, welche von je einer einlagigen Schicht aus wasserdampfdurchlässigem Leder verschlossen werden.

WO 2004/004504 A und WO 2004/028284 A gehören zum Stand der Technik gemäß Artikel 153(5) und 54(3) EPÜ für Anspruch 1.

Davon ausgehend besteht der Bedarf nach Laufsohlen, die wirkungsvoll atmungsaktiv sind und doch auf einfachste Weise und mithin so preisgünstig hergestellt werden können, so dass sie auch für Alltagsschuhe geeignet sind.

Die vorliegende Erfindung vermeidet die bekannten Nachteile durch die Merkmale des Anspruchs 1. Die Laufsohle ist von einer oder wenigen fensterartigen Durchbrechungen vollständig durchbrochen, und die mindestens eine fensterartige Durchbrechung wird von einer atmungsaktiven Einheit verschlossen. Die atmungsaktive Einheit kann daher ganz auf die technischen Bedürfnisse der Atmungsaktivität hin ausgebildet werden, ohne daß hierauf bei der Laufsohlenherstellung besonders Rücksicht genommen werden muß - jedenfalls wenn man von der vergleichsweise einfach durchzuführenden fensterartigen Durchbrechung an einer oder wenigen ausgewählten Stelle/n der Laufsohle einmal absieht.

Es hat sich gezeigt, dass fensterartige Durchbrechungen in der Laufsohle den mechanischen Beanspruchungen einer Laufsohle weit besser gerecht werden, als großflächige Laufsohlenzonen mit einer Vielzahl mirkoporöser Durchbrechungen. Als vorteilhaft hat es sich erwiesen, wenn atmungsaktive, nicht wasserdurchlässige folienartige Membranen im Falle eines Auf- oder Einbringens direkt auf die Laufsohle vergleichsweise kleinflächig gehalten werden. Dadurch wird die mechanische Eigenschaft der Laufsohle, insbesondere die Biegeelastizität so gut wie nicht beeinflusst. Auch leidet die Membran dadurch weniger, d.h. sie ist auch weniger gefährdet gegenüber mechanischen Überbeanspruchungen und Rissbildung, oder es können dünnere bzw. mechanisch wesentlich festere, aber in Ihrer Dampfdurchlässigkeit besonders wirkungsvolle Membranen verwendet werden. Ein besonderer Vorteil liegt darin, dass auch mehrlagige Membranen gleicher oder unterschiedlicher Eigenschaften vorteilhaft Anwendung finden können. Dadurch können mechanischen Anforderungen und/oder Dampfdurchlässigkeits- bzw. Wasserundurchlässigkeitsanforderungen in besonderer Weise Rechnung getragen werden.

Für die Laufsohlenmechanik besonders vorteilhaft und für die Membranen in vorteilhafter Weise entlastend haben sich Rahmen erwiesen, die die fensterartigen Durchbrechungen, vorzugsweise umlaufend geschlossen, an deren Rand umgeben. Dies insbesondere dann, wenn diese umlaufenden Rahmen als Verstärkungsprofil ausgebildet sind und insbesondere dann, wenn die Rahmen von der Laufsohlen-Auftrittsfläche fortweisende, d.h. zum Schuhinneren hinweisende Rahmenwangen aufweisen. In den Bereichen der Laufsohle, in denen sich keine fensterartigen Durchbrechungen und deren nach Innen vorspringende Profilrahmen befinde, kann die Laufsohle auf ihrer Innenseite in üblicher Weise mit einer stegartigen wabenförmigen - nicht unbedingt sechsekkigen - Distanzierungs- und Verstärkungsstruktur versehen sein. Diesen Zweck erfüllt im Bereich fensterartigen Durchbrechungen deren zugehöriger Rahmen.

Zum Schutze der erfindungsgemäß in die fensterartigen Durchbrechungen eingesetzten, zumindest aus der Membran bestehenden atmungsaktiven Einheit, haben sich Grobgitter erwiesen, welche unterhalb der Membran angeordnet sind. Bei rahmenförmig eingefassten fensterartigen Laufsohlendurchbrechungen können diese Grobgitter aus dem selbem Material und in demselben Arbeitsgang wie die Laufsohle selbst hergestellt werden. Etwas aufwendiger aber in seiner technischen Wirkung und im Verarbeitungshandling besonders günstig haben sich allerdings solche Grobgitter erwiesen, die als Bestandteil der atmungsaktiven Einheit dienen und unabhängig von der Laufsohle hergestellt und erst nachfolgend mit dieser zusammengefügt werden, insbesondere wenn sie in den profilierten Rahmen um die fensterartige Laufsohlendurchbrechung eingesetzt oder in entsprechender Weise mit dem Laufsohlenmaterial bei der Laufsohlenherstellung einspritzt werden.

Als hochwirkungsvoll haben sich solche Grobgitter erwiesen, die lamellenartig ausgebildet sind. Unter einer lamellenartigen Ausbildung werden eine Vielzahl etwa parallel zueinander angeordneter Materialstreifen verstanden, die in der Regel so lang sind wie es Breite oder Länge des Grobgitters entspricht. An ihren Stirnenden sind sie am Grobgitterrahmen oder dem die fensterartige Durchbrechung der Laufsohle umgebenden Rahmenprofil mit demselben fest verbunden. Ihr Querschnitt weist eine flache Form auf, d.h. eine im Verhältnis zur Querschnittsbreite geringere Dicke. Es handelt sich bei den Lamellen also um Flachprofile. Deren Anordnung im Grobgitter ist so gewählt, dass die Lamellenschmalseiten nach oben bzw. unten weisen, wobei die Lamellenseitenflächen auf die Vertikalrichtung der Laufsohle bezogen eine gewisse Schrägneigung aufweisen können und mithin auch zur Auftrittsfläche schräg geneigt sein können. Je nach Lamellenlänge können zwischen benachbarten Lamellen Abstützungselemente vorgesehen sein. Von besonderem Vorteil für einen langlebigen Schutz der Membranen haben sich solche Grobgitter erwiesen, bei denen zumindest die, bevorzugt als Lamellen gestalteten, Unterteilungselemente im Vergleich zum Laufsohlenmaterial besonders elastisch sind. Als besonders günstig haben sich insgesamt aus thermoplastischem Gummi (Thermo Plastic Rubber) hergestellte Grobgitter Einsätze erwiesen. In dieser Weise elastisch aufgebaute Gitterunterteilungen besitzen eine Querelastizität, welche es gestattet, das z.B. kleinere Steinchen zwischen die Gitterstäbe unter elastischer Querverformung der Gitterstäbe, z.B. in die Lamellenzwischenräume, eindringen und dort verbleiben können, ohne die Grobgitterstruktur zu schädigen oder weiter nach oben zur Membran vorzudringen. Solche eindringenden Materialien können nach der Schuhbenutzung auf einfache Weise entfernt werden, ohne dass Schädigungen an dem atmungsaktiven Einsatz hinterbleiben. Derartig ausgebildete Grobgitter haben also eine gewisse reversible Speicherfähigkeit für Fremdkörper, die anderenfalls die atmungsaktive Einheit dauerhaft schädigen oder deren Funktion dauerhaft beeinträchtigen könnten.

Als besonders wirkungsvoll hat sich ein zwischen dem Grobgitter und der Membran zwischengefügtes Feingitter, insbesondere ein Metallnetz erwiesen. Dadurch wird die Langlebigkeit und der Funktionserhalt der Membran trotz vergleichsweise großer fensterartiger Laufsohlendurchbrechungen erheblich gefördert. Schließlich hat sich für die Atmungsfunktion bei Erhalt der gewünschten mechanischen Festigkeit und elastischen Eigenschaften der Schuhsohle als besonders vorteilhaft erwiesen, wenn eine oder mehrere weitere (Teil)sohlen, wie eine Zwischensohle, eine Textilsohle und/oder eine Innensohle ihrerseits Durchbrechungen nach Größe und Form der fensterartigen Laufsohlendurchbrechungen in direkter Übereinanderanordnung zu den Laufsohlendurchbrechungen aufweisen. Durch ein solches Übereinanderordnen mehrerer Teilsohlen, die jeweils einen gewissen Beitrag zu Gesamtkompressibilität der Laufsohle beitragen, verbessert sich (in Verbindung mit den tiefliegenden Membranen) die "Pumpwirkung" beim Gehen/Laufen mit derartig ausgerüsteten Schuhen. Dabei ist es nicht erforderlich, dass die in diesen Teilsohlen vorhandenen "fensterartigen Durchbrechungen" völlig offen bleiben. Vielmehr werden in Teilsohlen aus schockabsorbierendem Material eine Mehrzahl von Löchern in den "Fensterbereich" gestanzt. Bei textilen Zwischensohlen, die solche Durchstanzungen nicht gestatten, werden die Fenster freigeschnitten und wird ein netzartiges Gebilde, insbesondere ein Metallnetz, am Durchbrechungsrand angenäht.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung, in der - beispielhaft - ein bevorzugtes Ausführungsbeispiel einer atmungsaktiven Schuhsohle dargestellt ist.

In der Zeichnung zeigen:
- Fig. 1: einen Schuh mit atmungsaktiver Sohle in Vertikalschnittdarstellung ohne Schnittschraffur;
- Fig. 2: eine atmungsaktive Sohle nach Fig. 1 mit einer atmungsaktiven Einheit in Explosionsdarstellung;
- Fig. 3A: eine atmungsaktive Einheit nach Fig. 2 - in Vertikalschnittdarstellung;
- Fig. 3B: die atmungsaktive Einheit nach Fig. 3A in Explosionsdarstellung;
- Fig. 4: von der atmungsaktiven Sohle nach Fig. 1 und 2 eine Draufsicht einer fensterartigen Durchbrechung;
- Fig. 5: einen Membran und ein Feingitter zum Herstellen einer atmungsaktiven Einheit;
- Fig. 6: eine andere Ausführungsform einer atmungsaktiven Laufsohle in perspektivischer Darstellung;
- Fig. 7A: eine weitere Ausführungsform einer Schuhsohle ein Explosionsdarstellung - perspektivisch;
- Fig. 7B: in der gleichen Darstellungsart eine weitere Ausführungsform;
- Fig. 8: von dem Ausführungsbeispiel nach Fig. 7A eine Längsschnittdarstellung nach Art einer Explosionsdarstellung (Schnitt entlang der Linie VIII-VIII gemäß Fig. 7A) sowie
- Fig. 9: von dem Ausführungsbeispiel nach Fig. 7B einen Lamelleneinsatz;

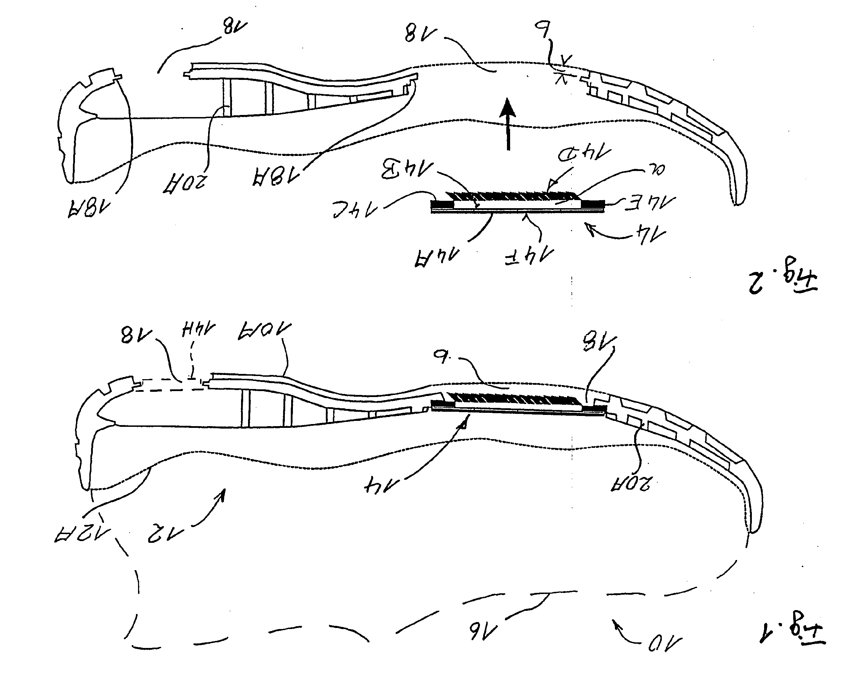

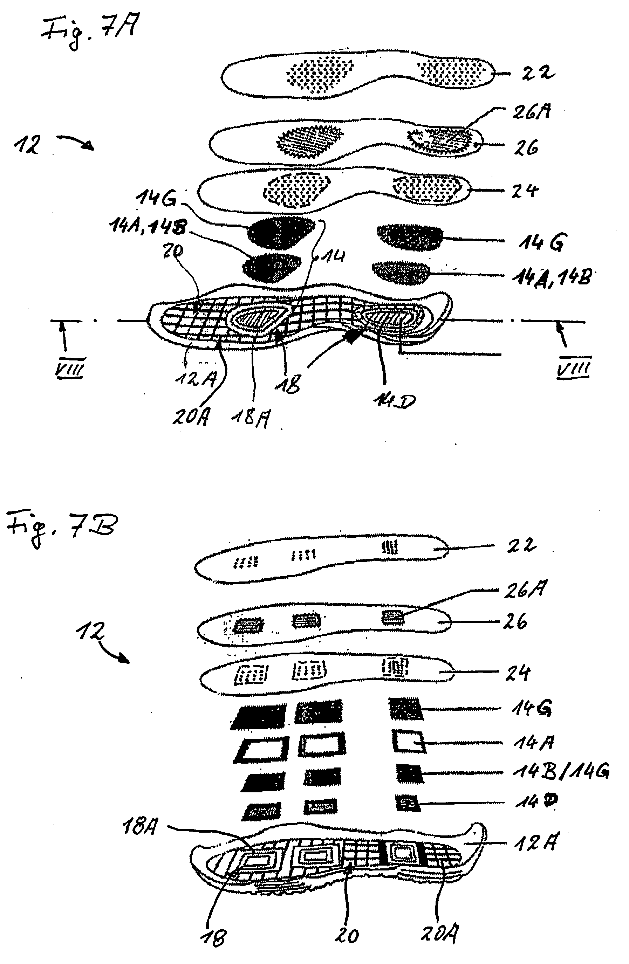

Wie aus den Figuren 1 und 2 ersichtlich, besteht ein Schuh 10 aus einer atmungsaktiven Sohle 12 und einem Schuhschaft 16. Letzerer ist lediglich gestrichelt dargestellt, weil es hierauf und auf die konkrete Verbindung zur atmungsaktiven Laufsohle 12A nicht ankommt, denn die Verbindungsmöglichkeiten sind allgemein bekannt. Insbesondere ist es möglich, die atmungsaktive Sohle zu unterteilen in eine Laufsohle und eine Innensohle und/oder eine Zwischensohle (siehe Fig. 7A bis Fig. 8). Eine der beiden letzteren können (anstelle der Laufsohle) einerseits mit dem Schuhschaft und andererseits mit der Laufsohle verbunden sein. Falls Zwischensohlen und/oder Innensohlen Anwendung finden, sind diese notwendigerweise und gebräuchlicherweise mit Durchlüftungsdurchbrechungen versehen. Auch hierauf kommt es im Einzelnen aber nicht an, so daß Innen- und%oder Zwischensohlen nicht dargestellt sind.

Wie aus Figuren 1 und 2 ersichtlich, ist die Laufsohle 12A im Ballen- und Fersenbereich mit großflächigen fensterartigen Durchbrechungen 18 versehen, wobei die Laufsohle 12A aus üblichen Materialien und nach üblichen Methoden hergestellt ist, aber keine weiteren Durchbrechungen für den Feuchtigkeitsaustritt aufweisen muss. In zumindest eine der beiden dargestellten Durchbrechungen 18 ist eine atmungsaktive Einheit 14 eingesetzt, deren Aufbau und Verbindungsweise weiter unten beschrieben werden. Während bevorzugt beide Durchbrechungen mit den erfindungsgemäßen atmungsaktiven Einheiten verschlossen werden, ist es auch möglich, die eine oder andere stattdessen mit einem Blindverschluß 14H zu versehen. Ebenso ist es möglich die gleiche Laufsohle alternativ mit verschieden aufgebauten atmungsaktiven Einheiten auszustatten.

Während es grundsätzlich möglich ist, die atmungsaktiven Einheiten wesentlich großflächiger auszugestalten, als es der jeweiligen fensterartigen Durchbrechung der Laufsohle entspricht, haben die Laufsohlendurchbrechungen und die atmungsaktiven Einheiten bevorzugt den gleichen Grundriß und überlappen einander im Bereich von Randstreifen 14C der atmungsaktiven Einheit 14 und Rahmen 18A am Rande der Durchbrechung 18, wo beide dicht miteinander verbunden werden.

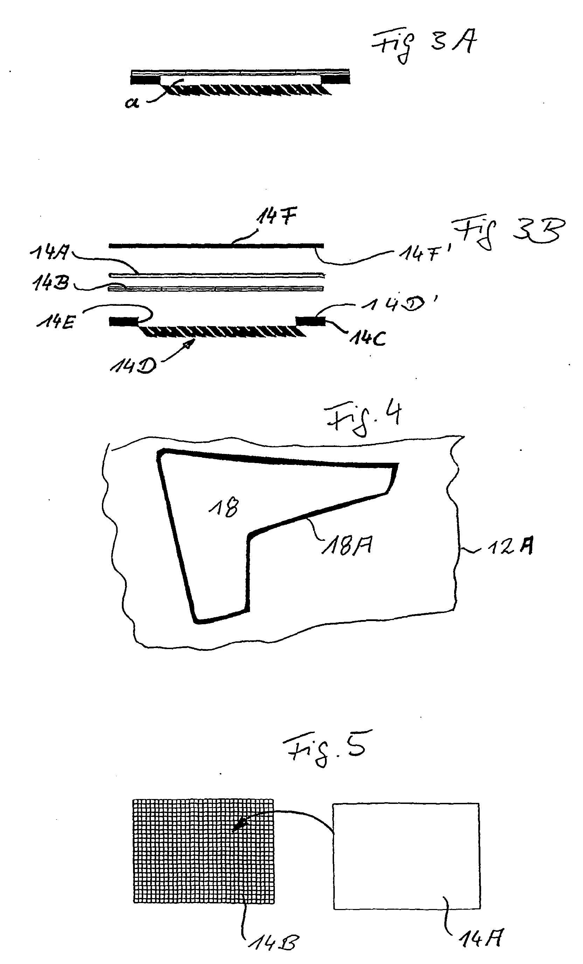

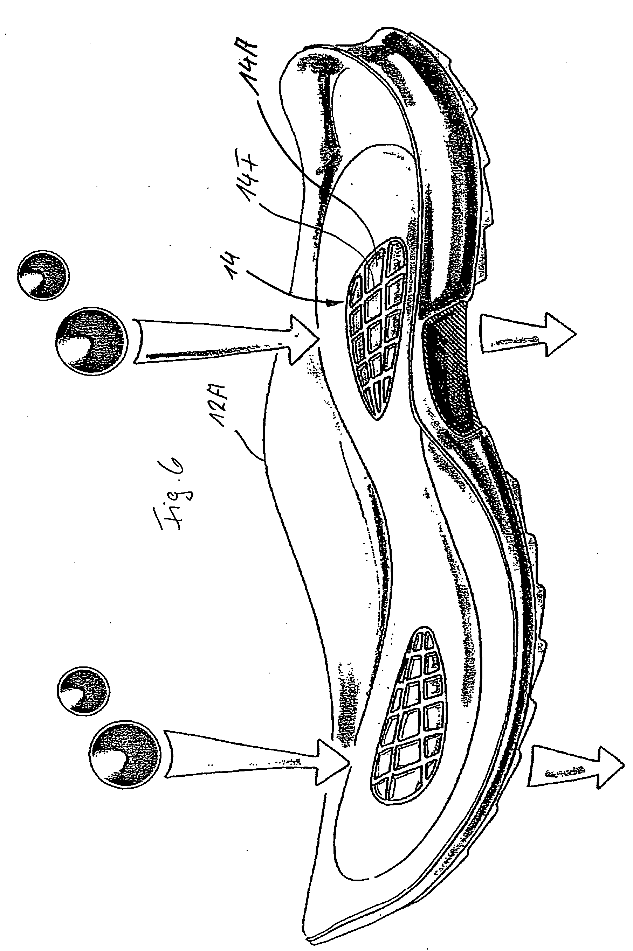

Die Geometrie der fensterartigen Durchbrechungen 18 kann im Unterschied zu Fig. 4 in weitem Umfang frei ausgewählt werden und insbesondere in das optische Design der Schuhauftrittsfläche 10A eingepaßt und auf dieses abgestimmt sein - wie aus Fig. 6 bis Fig. 7B beispielhaft ersichtlich.

Wie Figur 5 zeigt, kann die atmungsaktiven, nicht wasserdurchlässige folienartige Membran 14A als Bahnenware verarbeitet werden, ebenso eine gitterartige Schicht (Feingitter 14B), welche, vorzugsweise von unten, unmittelbar an der Membran anliegt und diese mit trägt sowie mechanisch schützt. Membrane und Feingitter können aus den üblichen Materialien hergestellt werden. Dabei bedeutet "Feingitter" lediglich, daß ein Schichtmaterial eine Vielzahl kleinerer Durchbrechungen aufweist, wobei die Dicke dieser Schicht z. B. in der Größenordnung von einem Millimeter oder weniger liegt. Geflechte aus Nylonmaterial oder Metalldrähten sind besonders bevorzugt.

Wie nun im Einzelnen aus Figuren 3A und 3B hervorgeht, kann eine atmungsaktive Einheit aus einer Vielzahl von Komponenten bestehen. Neben der zwingend erforderlichen atmungsaktiven, nicht wasserdurchlässigen folienartigen Membran 14A wird vorzugsweise ein Feingitter 14B der vorerwähnten Art verwendet. Beide werden in einem Bereich, der vorzugsweise außerhalb der zu verschließenden Durchbrechung 18 der Laufsohle 12A liegt, zu einer baulichen Einheit verbunden, z. B. durch Verkleben oder Heißverschweißen. Dadurch bleiben Struktur und technische Eigenschaft der Membran 14A in dem entscheidenden Durchbrechungsbereich erhalten. Die Feuchtigkeitsaustauschfläche ist fast so groß wie die Fläche der Laufsohlendurchbrechung 18, weil das Feingitter 14 auf der zum Membran liegenden Seite quasi "hinterlüftet" ist.

Schuhaußenseitig ist die atmungsaktive Einheit 14 mit einem (ersten) Grobgitter 14D versehen, d. h. einer Struktur deren Durchbrechungen großflächiger als die des vorerwähnten Feingitters sind. Insbesondere kommt, wie dargestellt und insoweit bevorzugt, eine Lamellenstruktur als erstes Grobgitter 14D in Betracht, weil derartige Lamellen, insbesondere falls sie wie dargestellt schräg gestellt sind, einen "Einwegventileffekt" erzeugen können, falls die Lamellen beim Auftreten der Laufsohle auf eine Unterlage aufstoßen. Dann können die Lamellen unter zumindest teilweise Schließen der Lamellenschlitze elastisch verformt werden. Diese Verformung wird also rückgängig gemacht sobald wieder eine Entlastung eintritt. Bevorzugter weise kommt die Unterseite des ersten Grobgitters 14D allerdings nur in Ausnahmefällen mit dem Boden in Kontakt über den der Benutzer geht oder läuft, weil, wie aus Fig. 1 ersichtlich, vorzugsweise ein vertikale Abstand b von einigen Millimetern zwischen der Schuhauftrittsfläche 10A und der Grobgitterunterseite vorgesehen ist.

Auch oberhalb des Grobgitters 14D ist vorzugsweise ein vertikaler Abstand a zur Membran 14A oder zum Feingitter 14B belassen. Hierdurch wird ein Speicherraum für zwischen die Grobgitteröffnungen hochsteigender Feuchtigkeit von außen geschaffen. Ebenso wird sichergestellt, daß die für die Dampfdiffusion nach außen verfügbare Membranfläche durch das Vorhandensein des Grobgitters nicht verkleinert wird. Das Grobgitter 14D hat im Übrigen bevorzugter weise denselben Grundriss wie die übrige Schicht bzw. übrigen Schichten der atmungsaktiven Einheit 14, wobei die Verbindung mit dieser Schicht/diesen Schichten wiederum im Bereich eines Randstreifens 14C durch Kleben, Heißverschmelzen, Vulkanisieren und dergleichen erfolgt. Der vertikale Abstand a kann insbesondere durch einen Zwischenrahmen 14E erzeugt werden, oder aber durch entsprechende einstückige Ausbildung des ersten Grobgitters.

Gegenüber dem Inneren des Schuhs kann die Membran 14A durch ein (zweites) Grobgitter 14F beabstandet und geschützt werden. Dieses Großgitter hat bevorzugt wieder denselben Grundriß wie die atmungsaktive Einheit 14. Eine mögliche Gestaltung ist in Figur 6 gezeigt.

Die Explosionsdarstellungen nach Figuren 7A und 7B zeigen zwei weitere alternative Ausführungsformen einer erfindungsgemäßen Schuhsohle soweit die Aufbauten sich gleichen werden sie nachfolgend zusammenfassend beschrieben:

Eine sogenannte Laufsohle 12A aus einem beliebigen elastischen Laufsohlenmaterial, insbesondere aus Kunststoff, weist zwei (Fig. 7A) bzw. drei (Fig. 7B) fensterartige Durchbrechungen 18 auf. Diese werden von einem profilartigen umlaufenden Rahmen 18A umfasst.

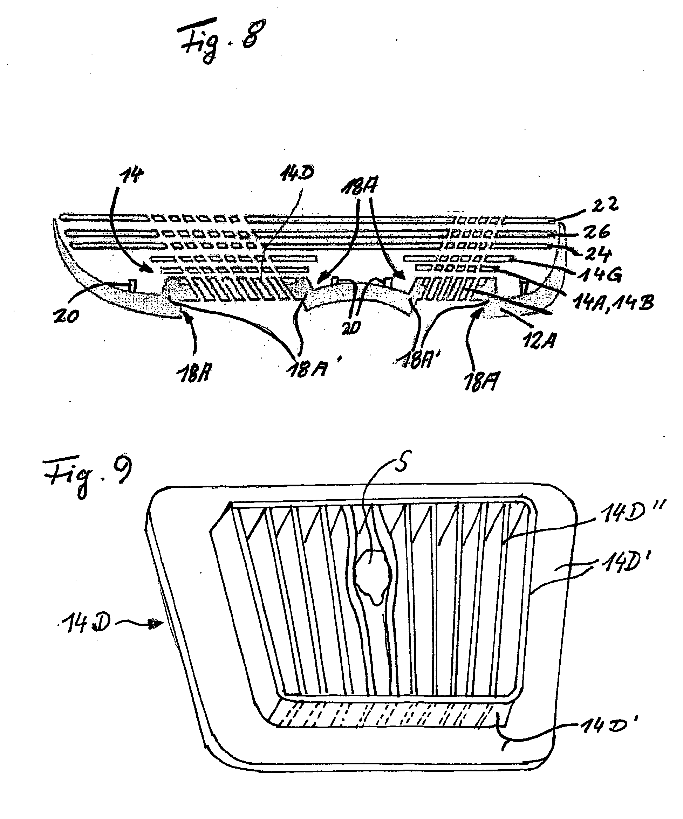

Wie im einzelnen näher aus Figur 8 ersichtlich, bildet der umlaufende Rahmen 18A ein Verstärkungsprofil, dass in diesem dargestellten und insoweit bevorzugten Ausführungsbeispiel Rahmenwangen 18A' umfasst, welche von der Auftrittsfläche fortweisen. Diese Wangen führen zu einer sockelartigen Nach-Oben-Verlagerung der atmungsaktiven Einheit 14, welche nachfolgend noch näher beschrieben werden wird. Die übrigen Bereiche der Laufsohleninnenfläche sind, wie in Figuren 1 und 2 sowie 7A und 7B ersichtlich - aber auch in Figur 8 erkennbar, mit einer wabenartigen Stegstruktur 20 ausgefüllt, deren Stege 20A vom Laufsohlenboden etwa so hoch wie die sockelartigen Rahmen reichen.

Ansonsten unterscheiden sich Fig. 7A und Fig. 7B hinsichtlich der Laufsohle dadurch, dass im ersteren Fall im Ballen- und Fersenbereich je eine fensterartige Durchbrechung vorgesehen ist, während im letzteren Fall im Ballenbereich eine weitere fensterartige Durchbrechung für noch mehr Ventilation sorgt.

Die in Figuren 7A bis 8 dargestellten Grobgitter 14D können dem Prinzip nach alle wie in dem Ausführungsbeispiel nach Figur 9 ausgeführt sein, wobei die Grundrißformen natürlich der zugehörigen Fensterform entsprechen muss. Dieser Aufbau wird anhand von Figur 9 kurz beschrieben:

Das in Figur 9 dargestellte und insoweit bevorzugte Ausführungsbeispiel eines Grobgitters ist als Lamelleneinsatz aufgebaut. Der Lamelleneinsatz hat einen umlaufenden Rahmen 14D', wie er seinem Aufbau und seiner Funktion nach schon in Figuren 1 bis 3B erläutert wurde. Im vorliegenden Ausführungsbeispiel nach Figur 9 ist der Rahmen 14D' als Winkelrahmen aufgebaut, wobei der eine Winkelschenkel als umlaufender Flansch dient und der andere Winkelschenkel als Befestigungsrand für die lamellenartigen Gitterstäbe 14D", die sich über die gesamte von dem Rahmen 14D' aufgespannte Fensterfläche von der einen zur anderen Seite erstrecken, wo sie einstückig mit dem Rahmen verbunden sind. Wie ersichtlich ist die Lamellendicke deutlich geringer als die Lamellenbreite, so dass eine große Dunstungsfläche zum Gasdurchtritt erhalten bleibt. Der gesamte Lamelleneinsatz ist aus thermoplastischem Gummi einstückig hergestellt. Die Lamellen sind außerordentlich elastisch. Aufgrund ihrer Querelastizität können sie so weit auseinander gedrückt werden, dass Gegenstände, wie kleinere Steine S zwischen den Lamellen aufgenommen und gehalten werden können, bis sie nach der Schuhbenutzung mit einfachem Reinigungsgerät aus dieser elastischen Umklammerung herausgeholt werden können. Derartige Lamelleneinsätze können in die schon hergestellte Laufsohle eingeklebt oder mit der Laufsohle umspritzt werden, wie weiter oben bzw. weiter unten beschrieben.

Bei dem Ausführungsbeispiel nach Figur 7A ist das Grobgitter bereits mit der Laufsohle verbunden, während nach dem Ausführungsbeispiel der Figur 7B der Lamelleneinsatz gemäß Figur 9 erst nachträglich in die Laufsohle eingeklebt wird.

Gemäß Figur 7A sind die Membran 14A und das darunter befindliche Feingitter 14B bereits zusammengefasst (wie zu Fig.5 beispielhaft beschrieben) und ausreichend groß zugeschnitten, und mit einem Rand für die Befestigung mit dem Rahmen der fensterartigen Durchbrechung ausgestattet - wie aus Figur 8 besonders leicht ersichtlich ist. Bei beiden Ausführungsbeispielen ist oberhalb der Membran 14A eine, ggf. textile, Schutzschicht 14G eingefügt , die wasserdampfundurchlässig, aber nicht notwendig wasserundurchlässig ist. Dabei sieht das Beispiel nach Fig. 7B vor, dass die Membran 14A an ihrer Unterseite wahlweise von einem Feingitter 14B und/oder einer Schutzschicht 14G geschützt sein kann.

Ansonsten ist der Sohlenaufbau in Figuren 7A und 7B wieder der Gleiche:

Oberhalb der mit den atmungsaktiven Einheiten 14 versehenen Laufsohle 12A befindet sich eine Zwischensohle 24, z.B. aus einem Fasermaterial wie es als TEXON bekannt ist, angeordnet. Die Zwischensohle ist wahlweise mit einer Freistanzung (gestrichelt dargestellt) oder mit gestanzten Löchern im Bereich oberhalb der fensterartigen Sohlenassparungen versehen. Letzteres (gestänzte Löcher) gilt auch für die Oberste, als Innensohle 22 aus z.B. Schaumgummi hergestellte Teilsohle. Zwischen der Innensohle 22 und der Zwischensohle 24 kann noch eine Textilsohle 26 vorgesehen sein, die im Bereich der fensterartigen Aussparung durchbrochen und nachfolgend mit einem randvernähten Metallnetz 26A verschlossen ist. Alle den fensterartigen Durchbrechungen der Laufsohle entsprechenden Durchbrechungen der übrigen Sohlen sind direkt übereinander angeordnet, was der Figur 8 wegen der Explosionsdarstellung nur indirekt entnehmbar ist, weil jede nächst höher gelegene Sohlensicht maßstabsmäßig leicht vergrößert ist.

Eine bevorzugte Herstellungsweise einer atmungsaktiven durchbrochenen Laufsohle 12A besteht darin, zunächst die atmungsaktive Einheit 14 eigenständig herzustellen und ihr den gewünschten Schichtaufbau dabei zu geben und diese dann in eine Spritzgießform in einen dafür vorgesehenen Aufnahmebereich einzulegen. Diesem Aufnahmebereich gegenüberliegend ist die Spritzgießform dann mit einer Zone zur Ausbildung einer fensterartigen Durchbrechung der Laufsohle ausgestattet. Nach Schließen der Spritzgießform kann die Laufsohle in bekannter Weise im Spritzgussverfahren hergestellt werden. Dabei verbindet sich die Laufsohle in ihrem hierfür vorgesehenen Bereich des Rahmens 18A der Durchbrechung 18 mit dem entsprechenden Randstreifen des atmungsaktiven Einsatzes.

### Bezugszeichenliste

- 10: Schuhe
- 10A: Schuhauftrittsfläche
- 12: Sohle
- 12A: Laufsohle
- 14: atmungsaktive Einhei
- 14A: Membran
- 14B: Feingitter
- 14C: Randstreifen
- 14D: erstes Grobgitter
- 14D': Rahmen
- 14D": Lamellen
- 14E: Zwischenrahmen
- 14F: zweites Grobgitter
- 14F': Rahmen
- 14G: Schutzschicht
- 16: Schuhschaft
- 18: Durchbrechung
- 18A: Rahmen
- 18A': Rahmenwangen
- 20: Stegstruktur
- 20A: Steg
- 22: Innensohle
- 24: Zwischensohle
- 26: Textilsohle
- 26A: Metallnetz
- a: Abstand
- b: Abstand
- S: Stein

## Patentansprüche

1. Schuh mit atmungsaktiver Sohle (12), zumindest bestehend aus einer zumindest eine großflächige fensterartige Durchbrechung (18) aufweisenden Laufsohle (12A), einer die Durchbrechung (18) verschließenden atmungsaktiven, nicht wasserdurchlässigen Membran (14A) und einem mit der Laufsohle direkt oder indirekt fest verbundenen Schuhschaft (16),
**dadurch gekennzeichnet, dass**
die Membran (14A) folienartig und Bestandteil einer atmungsaktiven Einheit (14) ist, die auf der Membranunterseite ein Schutzelement in Gestalt eines ersten, einen Rahmen (14D') mit einem die Laufsohlendurchbrechung (18) überlappenden Randstreifen (14C) aufweisenden Grobgitters (14D) aufweist und bei dem die atmungsaktive Einheit im Bereich des Randstreifens (14C) mit einem die fensterartige Laufsohlendurchbrechung an ihrem Rand umlaufenden Rahmen (18A) fest verbunden ist.

2. Schuh nach Anspruch 1, **dadurch gekennzeichnet, dass** das erste Grobgitter (14D) lamellenartig ausgebildet ist.

3. Schuh nach Anspruch 1 oder 2, **dadurch gekennzeichnet, dass** das Grobgitter (14D) elastisch verformbar ist.

4. Schuh nach Anspruch 3, **dadurch gekennzeichnet, dass** das Grobgitter (14D) elastisch verformbare Lamellen (14D") aufweist.

5. Schuh nach einem der Ansprüche 1 bis 4, **gekennzeichnet durch** einen in die Laufsohlendurchbrechung (18), einsetzbaren Lamelleneinsatz.

6. Schuh nach einem der Ansprüche 3 bis 5, **dadurch gekennzeichnet, dass** das zweite Grobgitter (14F) einen, insbesondere umlaufenden Rahmen (14F') aufweist.

7. Schuh nach einem der Ansprüche 1 bis 6, **dadurch gekennzeichnet, dass** die atmungsaktive Einheit im Bereich der fensterartigen Durchbrechung der Laufsohle (12A) mit vertikalem Abstand (b) von der Schuhauftrittsfläche (10A) angeordnet ist.

8. Schuh nach einem der Ansprüche 1 bis 7, **dadurch gekennzeichnet, dass** atmungsaktive Einheiten (14) im Ballenbereich und/oder im Fersenbereich der Laufsohle (12A) angeordnet sind/ist.

9. Schuh nach einem der Ansprüche 1 bis 8, **dadurch gekennzeichnet, dass** die Membran (14A) mit einer Vertikalöffnungen aufweisenden Innensohle (22), Zwischensohle (24) und/oder Textilsohle (26) verbunden oder verbindbar ist und die Innen-, Zwischen- und/oder Textilsohle mit der Laufsohle (12A) zumindest in einem die fensterartige Durchbrechung (18) umgebenden Randbereich fest verbunden ist.

10. Schuh nach einem der Ansprüche 1 bis 9, **gekennzeichnet durch** eine Innensohle (26), insbesondere aus Stoff, mit einer **durch** ein Gitter (26A), insbesondere aus Metall, abgedeckte Vertikaldurchbrechung.

11. Schuh nach einem der Ansprüche 1 bis 10, **dadurch gekennzeichnet, dass** alle etwa vorhandenen Teilsohlen (12A; 22; 24; 26) Durchbrechungen an gleicher Position und, ggf. verteilt über eine der zugehörigen fensterartigen Durchbrechungen der Laufsohle entsprechende Fläche, aufweisen, so dass sämtliche einer fensterartigen Durchbrechung entsprechenden Durchbrechungszonen im wesentlichen vertikal übereinander angeordnet sind.

12. Schuh nach einem der Ansprüche 1 bis 11, **dadurch gekennzeichnet, dass** die Membran mehrlagig ist.

13. Schuh nach Anspruch 12, **dadurch gekennzeichnet, dass** die Lagen atmungsaktiv und/oder wasserundurchlässig sind.

14. Schuh nach Anspruch 12 oder 13, **gekennzeichnet durch** eine Schutzschicht (14G) oberhalb einer Membran (14A).

15. Schuh nach einem der Ansprüche 2 bis 14, **dadurch gekennzeichnet, dass** das Grobgitter (14D) mit vertikalem Abstand (a) von der Membran (14A) und dem ggf. vorhandenen Feingitter (14B) angeordnet ist.

16. Schuh nach einem der Ansprüche 1 bis 15, **dadurch gekennzeichnet, dass** ein erster Zwischenrahmen (14E) zwischen dem ersten Grobgitter (14D) und der Membran (14A) und dem ggf. vorhandenen Feingitter (14B) eingefügt ist.

17. Schuh nach einem der Ansprüche 1 bis 16, **dadurch gekennzeichnet, dass** die atmungsaktive Einheit (14) ein zweites Grobgitter (14F) aufweist, welches oberhalb der Membran (14A) angeordnet ist.

18. Schuh nach Anspruch 17, **dadurch gekennzeichnet, dass** das zweite Grobgitter (14F) mit vertikalem Abstand von der Membran angeordnet ist.

19. Schuh nach Anspruch 17 oder 18, **dadurch gekennzeichnet, dass** zwischen dem zweiten Grobgitter (14F) und der Membran (14A) ein zweiter Zwischenrahmen angeordnet ist.

20. Schuh nach einem der Ansprüche 1 bis 19, **dadurch gekennzeichnet, dass** die Laufsohle (12A) zumindest eine, von einem in den Schuh zurückspringenden Rahmen (18A) umgebene fensterartige Durchbrechung (18) aufweist, die von etwa parallel einander zugeordneten Lamellen unterteilt ist, wobei die Membran (14A) direkt oder indirekt mit der Rahmenoberseite dichtend verbunden ist zum Verschließen zumindest einer eine fensterartige Durchbrechung aufweisenden Laufsohle.

## Claims

1. Shoe having a breathable sole (12), consisting at least of an outsole (12A) having at least one large-area window-like opening (18), a breathable, water-impermeable membrane (14A) sealing the opening (18) and an upper (16) permanently attached directly or indirectly to the outsole, **characterised in that** the membrane (14A) is film-like and part of a breathable unit (14) having on the underside of the membrane a protective element in the form of a first coarse lattice (14D) having a welt (14D') with an edge strip (14C) overlapping the outsole opening (18) and wherein the breathable unit in the area of the edge strip (14C) is permanently attached to a welt (18A) running around the edge of the window-like outsole opening.

2. Shoe according to claim 1, **characterised in that** the first coarse lattice (14D) has a lamellar structure.

3. Shoe according to claim 1 or 2, **characterised in that** the coarse lattice (14D) is elastically deformable.

4. Shoe according to claim 3, **characterised in that** the coarse lattice (14D) has elastically deformable lamellae (14D").

5. Shoe according to one of claims 1 to 4, **characterised by** a lamellar insert that can be inserted in the outsole opening (18).

6. Shoe according to one of claims 3 to 5, **characterised in that** the second coarse lattice (14F) has an in particular circumferential welt (14F').

7. Shoe according to one of claims 1 to 6, **characterised in that** the breathable unit in the area of the window-like opening in the outsole (12A) is positioned a vertical distance (b) away from the shoe tread (10A).

8. Shoe according to one of claims 1 to 7, **characterised in that** breathable units (14) are positioned in the ball area and/or in the heel area of the outsole (12A).

9. Shoe according to one of claims 1 to 8, **characterised in that** the membrane (14A) is attached or attachable to an insole (22), midsole (24) and/or textile sole (26) having vertical apertures and the insole, midsole and/or textile sole is/are permanently attached to the outsole (12A) at least in a boundary area surrounding the window-like opening (18).

10. Shoe according to one of claims 1 to 9, **characterised by** an insole (26), consisting in particular of fabric, with a vertical opening covered by a lattice (26A), consisting in particular of metal.

11. Shoe according to one of claims 1 to 10, **characterised in that** all part soles (12A; 22; 24; 26) that may be present have openings in the same position and optionally distributed over an area corresponding to the associated window-like openings in the outsole, such that all opening zones corresponding to a window-like opening are positioned substantially vertically above one another.

12. Shoe according to one of claims 1 to 11, **characterised in that** the membrane is multi-layered.

13. Shoe according to claim 12, **characterised in that** the layers are breathable and/or water-impermeable.

14. Shoe according to claim 12 or 13, **characterised by** a protective layer (14G) above a membrane (14A).

15. Shoe according to one of claims 2 to 14, **characterised in that** the coarse lattice (14D) is positioned a vertical distance (a) away from the membrane (14A) and the optionally present fine lattice (14B).

16. Shoe according to one of claims 1 to 15, **characterised in that** a first intermediate welt (14E) is inserted between the first coarse lattice (14D) and the membrane (14A) and the optionally present fine lattice (14B).

17. Shoe according to one of claims 1 to 16, **characterised in that** the breathable unit (14) has a second coarse lattice (14F) which is positioned above the membrane (14A).

18. Shoe according to claim 17, **characterised in that** the second coarse lattice (14F) is positioned a vertical distance away from the membrane.

19. Shoe according to claim 17 or 18, **characterised in that** a second intermediate welt is positioned between the second coarse lattice (14F) and the membrane (14A).

20. Shoe according to one of claims 1 to 19, **characterised in that** the outsole (12A) has at least one window-like opening (18) surrounded by a welt (18A) recessed into the shoe, which opening is divided by lamellae positioned approximately parallel to one another, the membrane (14A) being imperviously attached directly or indirectly to the upper side of the welt to seal the at least one window-like opening of the outsole.

## Revendications

1. Chaussure équipée d'une semelle (12) favorisant la respiration, composée d'au moins une semelle d'usure (12A) ayant au moins une ouverture (18) en forme de fenêtre de grande surface, une membrane (14A), imperméable à l'eau, favorisant la respiration et fermant l'ouverture (18) ainsi qu'une tige de chaussure (16) reliée solidairement directement ou indirectement à la semelle d'usure,
**caractérisée en ce que**
la membrane (14A) est en forme de film et fait partie d'une unité (14) favorisant la respiration, cette membrane ayant sur son côté inférieur, un élément de protection sous la forme d'une première grille grossière (14D), ayant un cadre (14D') avec une bande marginale (14C) chevauchant l'ouverture traversant la semelle d'usure (18), et dont l'unité favorisant la respiration, est reliée au niveau de la bande marginale (14C) à un cadre (18A) entourant son bord et ayant une ouverture de semelle d'usure en forme de fenêtre.

2. Chaussure selon la revendication 1,
**caractérisée en ce que**
la première grille grossière (14D) est en forme de lamelles.

3. Chaussure selon la revendication 1 ou 2,
**caractérisée en ce que**
la grille grossière (14D) est déformable élastiquement.

4. Chaussure selon la revendication 3,
**caractérisée en ce que**
la grille grossière (14D) comporte des lamelles (14D") déformables élastiquement.

5. Chaussure selon les revendications 1 à 4,
**caractérisée par**
un insert de lamelles qui se place dans l'ouverture (18) de la semelle d'usure.

6. Chaussure selon les revendications 3 à 5,
**caractérisée en ce que**
la seconde grille grossière (14F) comporte notamment un cadre périphérique (14F').

7. Chaussure selon les revendications 1 à 6,
**caractérisée en ce que**
l'unité favorisant la respiration est prévue dans la région de l'ouverture en forme de fenêtre de la semelle d'usure (12A), à une distance verticale (b) de la surface d'appui (10A) de la chaussure.

8. Chaussure selon les revendications 1 à 7,
**caractérisée en ce que**
des unités favorisant la respiration (14) sont prévues dans la zone de la plante des pieds et/du talon de la semelle d'usure (12A).

9. Chaussure selon les revendications 1 à 8,
**caractérisée en ce que**
la membrane (14A) est reliée ou peut être reliée à une semelle de propreté (22) ayant des ouvertures verticales, à une semelle intermédiaire (24) et/ou une semelle en textile (26), et la semelle de propreté, la semelle intermédiaire et/ou la semelle en textile sont reliées solidairement à la semelle d'usure (12A) au moins dans une zone périphérique entourant l'ouverture (18) en forme de fenêtre.

10. Chaussure selon les revendications 1 à 9,
**caractérisée par**
une semelle de propreté (26) notamment en tissu, avec une ouverture verticale couverte par une grille (26A) notamment en métal.

11. Chaussure selon les revendications 1 à 10,
**caractérisée en ce que**
toutes les semelles partielles, éventuellement présentes (12A; 22; 24; 26) ont des passages dans la même position et le cas échéant répartis sur des ouvertures réparties dans une surface correspondant aux ouvertures en forme de fenêtres de la semelle d'usure de façon que toutes les zones d'ouverture qui se trouvent dans une telle ouverture en forme de fenêtre soient pratiquement dans la direction verticale.

12. Chaussure selon les revendications 1 à 11,
**caractérisée en ce que**
la membrane est à plusieurs couches.

13. Chaussure selon la revendication 12,
**caractérisée en ce que**
les couches favorisent la respiration et/ou sont perméables à l'eau.

14. Chaussure selon la revendication 12 ou 13,
**caractérisée par**
une couche protectrice (14G) au-dessus d'une membrane (14A).

15. Chaussure selon les revendications 2 à 14,
**caractérisée en ce que**
la grille grossière (14D) est prévue à une distance verticale (a) de la membrane (14A) ou de la grille fine prévue le cas échéant (14B).

16. Chaussure selon les revendications 1 à 15,
**caractérisée en ce qu'**
un premier châssis intermédiaire (14E) est inséré entre la première grille grossière (14D) et la membrane (14A) et le cas échéant la grille fine (14B).

17. Chaussure selon les revendications 1 à 16,
**caractérisée en ce que**
l'une des unités (14) favorisant la respiration comporte une seconde grille grossière (14F) prévue au-dessus de la membrane (14A).

18. Chaussure selon la revendication 17,
**caractérisée en ce que**
la seconde grille grossière (14F) est distante verticalement de la membrane.

19. Chaussure selon la revendication 17 ou 18,
**caractérisée par**
un second châssis intermédiaire entre la seconde grille grossière (14F) et la membrane (14A).

20. Chaussure selon les revendications 1 à 19,
**caractérisée en ce que**
la semelle d'usure (12A) comporte au moins une ouverture (18) en forme de fenêtre entourée par le châssis (18A) venant en retrait dans la chaussure, cette ouverture étant subdivisée par des lamelles sensiblement parallèles,
la membrane (14A) étant reliée de manière étanche directement ou indirectement au côté supérieur du châssis pour fermer la au moins une ouverture de semelle ayant une interruption en forme de fenêtre.
